# EUROPÄISCHE PATENTSCHRIFT

(11) **EP 0 548 607 B1**
(45) Veröffentlichungstag und Bekanntmachung des Hinweises auf die Patenterteilung: **06.11.1996**
(21) Anmeldenummer: 92120547.2
(22) Anmeldetag: 02.12.1992
(51) Int. Cl.: B29D 30/30

(54) **Verfahren und Vorrichtung zum Ablängen einer Materialbahn aus Reifenaufbaumaterial**
Method and apparatus for cutting a web of tyre material
Méthode et dispositif pour couper une bande de matériau pour la fabrication de pneus

(30) Priorität: 21.12.1991 DE 4142723
(43) Veröffentlichungstag der Anmeldung: 30.06.1993
(73) Patentinhaber: Continental Aktiengesellschaft, 30165 Hannover (DE)
(72) Erfinder: Sergel, Horst, W-3000 Hannover 51 (DE); Brandes, Gerd, W-3005 Hemmingen (DE)

(56) Entgegenhaltungen:
- EP-A- 0 264 720
- EP-A- 0 284 761
- EP-A- 0 324 199
- EP-A- 0 344 928
- FR-A- 2 399 903
- US-A- 3 859 152
- US-A- 4 844 768

## Beschreibung

Die Erfindung betrifft ein Verfahren zum Ablängen einer Materialbahn nach dem Oberbegriff von Patentanspruch 1.

Das Trennschneiden der zum Aufbauen von Luftreifen benötigten streifenförmigen Einzelteile aus vorbehandelten Materialbahnen stellt an die Genauigkeit der Schnittführung hohe Anforderungen, die eine weitere Verschärfung noch dadurch erfahren, daß die Schnittkanten unter Schrägwinkeln gegen die Ränder der Bahnen gerichtet sein müssen, um einen breiteren Überlappungsbereich der Enden zu erhalten, was bei nicht klebefreudigen Materialbahnen besonders wichtig ist. Es sind Schneidvorrichtungen bekannt, bei denen das Ablängen in einem Vorabschritt erfolgt und das Auflegen auf eine Reifenaufbautrommel nach einer Zwischenlagerung durchgeführt wird. Hierbei entsteht der Nachteil, daß aufgrund unterschiedlichen Schrumpfungsverhaltens relativ große Längentoleranzen nicht zu vermeiden sind.

Aus der US-A-4 844 768 ist eine Vorrichtung zum Ablängen einer Materialbahn bekannt, bei der die Materialbahn über eine Zuführvorrichtung tangential auf eine Wickeltrommel aufgebracht und dort aufgewickelt wird. Nach weniger als einer Umdrehung der Wickeltrommel erstreckt sich der Rest der Materialbahn tangential von der Trommel weg zu der Schneidvorrichtung, und die Materialbahn wird in dieser Postition auf Länge geschnitten. Danach wird das Ende der Materialbahn von oben und unten von einer Fixiervorrichtung ergriffen und die Materialbahn über die Restlänge aufgelegt.

In der EP-A-0 264 720 wird eine Spulbandagenvorrichtung zur Erzeugung einer Spulbandage beschrieben. Die Vorrichtung enthält eine Andrückrolle, die an die Wickeltrommel heranschwenkbar, jedoch nicht am Umfang der Trommel verfahrbar ist.

Der Erfindung liegt die Aufgabe zugrunde, ein Verfahren zum Ablängen einer Materialbahn für Einlagen von Fahrzeugluftreifen anzugeben, bei dem aus kontinuierlichem Materialvorschub ohne Vorablängung eine definierte Verarbeitungslänge erzielt wird.

Diese Aufgabe wird erfindungsgemäß durch die kennzeichnenden Merkmale des Patentanspruchs 1 gelöst.

Eine Vorrichtung zur Durchführung des Verfahrens ist gekennzeichnet durch die Merkmale des Patentanspruchs 5

Mit der Erfindung erzielt man den Vorteil, daß die definierte kurze Restlänge eine reproduzierbare Materialüberlappung bzw. -zusammensetzung ohne Verdickung gewährleistet. Die Erfindung ist vorteilhaft einer automatischen Verarbeitung von Materialbahnen zugänglich, insbesondere bei bisher nicht rationell handhabbaren Materialien. Eine erfindungsgemäße Vorrichtung läßt sich problemlos unmittelbar in eine Fertigungsstraße für die Reifenkonfektionierung integrieren. Mit der Erfindung wird schließlich eine Qualitätssteigerung erzielt, und sie trägt weiterhin zu einer günstigeren Abfallvermeidung bei.

Der Kerngedanke der Erfindung besteht darin, das zu schneidende Material auf einer möglichst kurzen Restlänge zu straffen und es unmittelbar nach dem Schneiden auf eine Wickeltrommel aufzubringen. Zur Erzielung der kurzen Restlänge wird eine Andrückrolle auf dem Umfang der Wickeltrommel möglichst nahe an den Schneidbalken herangeführt, so daß sich zwischen der Schneidstelle und der Andrückrolle nur noch eine sehr kurze Materiallänge befindet. Dabei ist jedoch zu beachten, daß die Materialbahn nicht zwischen der Andrückrolle und dem Schneidbalken eingeklemmt wird, damit eine gleichmäßige Straffung über die gesamte Restlänge gewährleistet bleibt.

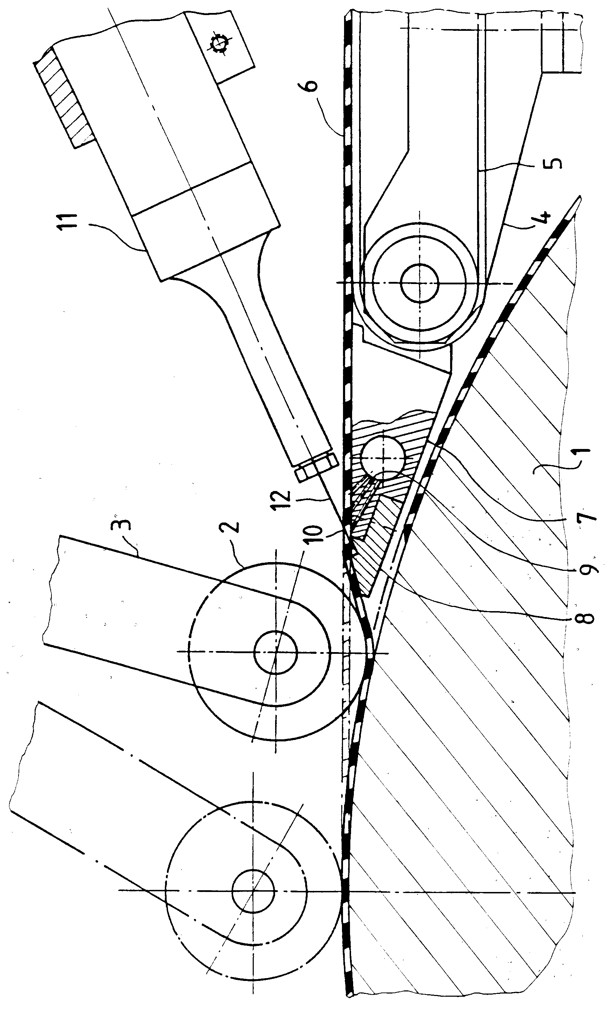

Nachfolgend wird ein Ausführungsbeispiel der Erfindung anhand einer Zeichnung näher erläuert. Es zeigt
- Fig. 1: eine Vorrichtung zur Durchführung des Verfahrens in einer Schemaskizze.

Die Vorrichtung weist eine Wickeltrommel 1 auf, die eine Reifenaufbautrommel oder aber eine Zwischentrommel darstellen kann. Der Wickeltrommel 1 ist eine Andrückrolle 2 zugeordnet, die sich an einem Schwenkarm 3 befindet, dessen Drehpunkt beweglich angeordnet ist, so daß die Andrückrolle 2 entlang dem Umfang der Wickeltrommel 1 bewegbar ist. Im Bereich der Wickeltrommel 1 befindet sich eine Zuführvorrichtung 4 mit einem Zuführband 5, auf dem eine Materialbahn 6 tangential an die Wickeltrommel 1 heranführbar ist. Unmittelbar vor der Zuführvorrichtung 4 befindet sich zwischen ihr und der Wickeltrommel 1 ein Schneidbalken 7 mit einer auswechselbaren Schneidleiste 8 aus Kunststoff. In dem Schneidbalken 7 ist eine Vakuumeinrichtung 9 integriert, die zur Fixierung der Materialbahn 6 im Bereich der Schneidstelle 10 dient. Der Schneidbalken 7 wie auch die Andrückrolle 2 mit ihrem Schwenkarm 3 können am Rahmen der Zuführvorrichtung 4 befestigt sein.Ein Schneidsystem 11, bei dem es sich vorliegend um ein ultraschallerregtes System handelt, ist oberhalb der Zuführvorrichtung 4 derart angeordnet, daß das Schneidmesser 12 mit der Horizontalen einen Winkel zwischen 5 und 30° einschließt. Für bestimmte Materialbahnen 6 kann auch ein konventionelles Schneidsystem vorgesehen sein. Wenn die Materialbahn eine ausreichend hohe Klebrigkeit aufweist, kann das Schneidmesser 12 auch steiler gestellt sein, so daß die Schnittflächen und späteren Kontaktflächen an der Stoßstelle kleiner werden. Die Zuführvorrichtung 4 wie auch das Schneidsystem 11 sind von der Wickeltrommel 1 wegfahrbar ausgebildet, um eine problemlose Entnahme aufgewickelter Materialstreifen zu gewährleisten.

Nachfolgend wird das erfindungsgemäße Verfahren näher erläutert. Es wird ausgegangen von einem Zustand, bei dem sich das vordere Ende des Materialstreifens 6 an der Schneidstelle 10 befindet, und die Trommel stillsteht. Das vordere Ende des Streifens 6 wird von einer nicht geseichneten Einrichtung, z.B. einer an sich bekannten Vakuumeinrichtung, erfaßt und tangential in Richtung auf die Wickeltrommel 1 bewegt. Das vordere Ende kann dann z.B. von einem Vakuumnest in der Wickeltrommel 1 erfaßt werden oder aber, falls sich bereits ein Materialstreifen auf der Wickeltrommel 1 befindet, hält das vordere Ende der Materialbahn 6 aufgrund der Klebrigkeit. Anschließend wird die Andrückrolle 2 unter definiertem Druck an die Wickeltrommel 1 herangeführt und die Trommel in Rotationsbewegung versetzt. Dabei wird die Materialbahn 6 auf ihr aufgelegt. Die Geschwindigkeiten des Zuführbands 5 der Zuführvorrichtung 4 und der Wickeltrommel 1 können zueinander synchronisiert sein, bevorzugt wird jedoch für die Wickeltrommel 1 eine gegenüber der Zuführvorrichtung 4 um ca. 2% erhöhte Geschwindigkeit, so daß die Materialbahn 6 unter einer gleichmäßigen Vorspannung auf der Wickeltrommel 1 aufgelegt wird.

Wenn die Wickeltrommel 1 nahezu eine Umfangslänge, genauer gesagt einen Winkel von mindestens 330°, bevorzugt 340 bis 350°, zurückgelegt hat, wird sie angehalten,und gleichzeitig wird auch der Antrieb für das Zuführband 5 gestoppt. Dabei befindet sich das vordere Ende der Materialbahn 6 etwa auf Höhe der Schneidleiste 8. Die Vakuumeinrichtung 9 wird in Gang gesetzt, so daß die Materialbahn 6 im Bereich der Schneidstelle 10 fixiert wird. Bei Bedarf kann zur Fixierung in diesem Bereich auch eine konventionelle Einrichtung eingesetzt werden. Nunmehr wird die Andrückrolle 2 auf dem Wickeltrommelumfang in Richtung auf den Schneidbalken 7 zubewegt, so daß die Materialbahn 6 im Bereich zwischen der Schneidstelle 10 und der Andrückrolle 2 eine Straffung erfährt. Dieser Restlängenbereich sollte möglichst kurz gehalten werden, wobei jedoch darauf zu achten ist, daß die Materialbahn 6 nicht zwischen der Andrückrolle 2 und der Schneidleiste 8 geklemmt wird. Wenn die Andrückrolle 2 ihre Endposition erreicht hat, wird das Messer 12 des ultraschallerregten Schneidsystems 11 in Gang gesetzt,und die Materialbahn 6 wird in Querrichtung durchgeschnitten. Die Andrückrolle 2 erfüllt im wesentlichen zwei Funktionen. Zum einen wird der bereits aufgelegte Teil der Materialbahn 6 mit seiner eingebrachten Vorspannung fixiert, zum anderen erfährt die Restlänge eine gleichmäßige Straffung, so daß ein äußerst exakter Schnitt erzielt wird und nach dem Schneiden die Schnittkante aufklafft, so daß die Enden nicht wieder zusammenkleben können. Durch die äußerst kurze Restlänge ist es möglich, den anschließenden Schrumpf definiert zu berücksichtigen, so daß bei dem sich anschließenden Auflegen der Restlänge auf die Wickeltrommel 1 ein exakter Stoß der schrägen Enden erzielt wird, ohne daß es zu Lücken oder Verdickungen des Materials aufgrund von Überlappungen kommt.

Nach dem Durchtrennen der Materialbahn 6 wird die Wickeltrommel 1 wieder in Gang gesetzt, so daß die Restlänge des Materialstreifens aufgelegt und von der Andrückrolle 2 angedrückt wird. Nunmehr ist ein Zyklus beendet und die Andrückrolle 2 wird in ihre Ausgangsposition zurückgefahren.

## Patentansprüche

1. Verfahren zum Ablängen einer Materialbahn (6) aus Reifenaufbaumaterial für Einlagen von Fahrzeugluftreifen durch Querschneiden oder Breitschneiden mittels eines Schneidsystems, z.B. eines ultraschallerregten, wobei die Materialbahn (6) über eine Zuführvorrichtung (4) tangential an eine Wickeltrommel (1) herangeführt und aufgewickelt wird, bis nahezu eine Umfangslänge erreicht ist und danach die Wickeltrommel (1) zum Stillstand gebracht wird,
**dadurch gekennzeichnet,**
daß die Materialbahn (6) im Bereich eines unmittelbar vor der Zuführvorrichtung (4) befindlichen Schneidbalkens (7) fixiert wird, insbesondere mittels Vakuum, daß dann eine Andrückrolle (2), die beim Aufwickeln der Materialbahn (6) unter einem definierten Druck an dieser anliegt, oder eine separate Rolle unter Mitnahme der tangential freien Materialbahn (6) auf dem Wickeltrommelumfang in Richtung auf den Schneidbalken (7) zubewegt wird, so daß die Materialbahn (6) eine Straffung erfährt und an einer Stelle möglichst nahe der durch das Vakuum erzeugten Fixierstelle fixiert wird und daß in diesem Zustand die Materialbahn (6) von dem Schneidmesser (12) durchtrennt wird.

2. Verfahren nach Anspruch 1, dadurch gekennzeichnet, daß die Geschwindigkeit der Zuführvorrichtung (4) um ca. 2% niedriger gewählt wird als die Geschwindigkeit der Wickeltrommel (1), so daß die Materialbahn (6) unter Vorspannung gehalten wird.

3. Verfahren nach Anspruch 1, dadurch gekennzeichnet, daß nach dem Durchtrennen der Materialbahn (6) die Wickeltrommel (1) wieder in Gang gesetzt wird, so daß das restliche Ende der Materialbahn (6) von der Andrückrolle (2) angerollt wird.

4. Verfahren nach Anspruch 1, dadurch gekennzeichnet, daß die Drehung der Wickeltrommel (1) mit dem Anfang der Materialbahn (6) in dem ersten Schritt um mindestens 330° erfolgt.

5. Vorrichtung zur Durchführung des Verfahrens nach Anspruch 1 mit einer Wickeltrommel (1), einer Zuführvorrichtung (4), mit der eine Materialbahn (6) tangential an die Wickeltrommel (1) heranfahrbar ist, einen Schneidbalken (7), der sich zwischen der Wickeltrommel (1) und der Zuführvorrichtung (4) befindet, dadurch gekennzeichnet, daß ein in Querrichtung der Materialbahn (6) verschiebbares Schneidsystem (11), das z.B. ultraschallerregt ist, vorhanden ist und, daß eine Andrückrolle (2) zur Mitnahme des tangential freien Abschnitts der Materialbahn (6) an einen Ort auf der Wickeltrommel (1) mit möglichst geringem Abstand zur Schneidstelle (10) steuerbar ausgebildet ist.

6. Vorrichtung nach Anspruch 5, dadurch gekennzeichnet, daß im Schneidbalken (7) eine Vakuumeinrichtung (9) zur Fixierung der Materialbahn (6) integriert ist.

7. Vorrichtung nach Anspruch 5, dadurch gekennzeichnet, daß der Schneidbalken (7) an der Zuführvorrichtung (4) befestigt ist.

8. Vorrichtung nach Anspruch 5, dadurch gekennzeichnet, daß das Messer (12) des Schneidsystems (11) mit der Horizontalen einen Winkel einschließt, der zwischen 5 und 30° liegt.

## Claims

1. Method of cutting to length a web (6) of tyre construction material for inserts of pneumatic vehicle 2tyres by transverse cutting or widthwise cutting by means of a cutting system, e.g. an ultrasonically excited system, the web of material (6) being supplied tangentially to a winding drum (1) via a conveying device (4) and wound on said drum until a circumferential length is almost reached, and then the winding drum (1) is brought to a standstill, characterised in that the web of material (6) is secured in the region of a cutting bar (7), which is situated immediately in front of the conveying device (4), more especially by means of vacuum, in that a pressure roller (2), which abuts against the web of material (6) under a specific pressure when said web is being wound-on or, whilst entraining the tangentially free web of material (6), a separate roller is moved towards the winding drum circumference in the direction of the cutting bar (7), so that the web of material (6) is stretched and secured at a location as close as possible to the securement location produced by the vacuum, and in that the web of material (6) is severed by the cutter (12) in this state.

2. Method according to claim 1, characterised in that the speed of the conveying device (4) is selected to be approx. 2 % less than the speed of the winding drum (1), so that the web of material (6) is kept under initial tension.

3. Method according to claim 1, characterised in that the winding drum (1) is set in motion again after the web of material (6) has been severed, so that the remaining end of the web of material (6) is rolled-on by the pressure roller (2).

4. Method according to claim 1, characterised in that the rotation of the winding drum (1) is effected with the beginning of the web of material (6) in the first step through at least 330°.

5. Apparatus for accomplishing the method according to claim 1, having a winding drum (1), a conveying device (4), by means of which a web of material (6) is tangentially suppliable to the winding drum (1), and a cutting bar (7) which is situated between the winding drum (1) and the conveying device (4), characterised in that a cutting system (11) is provided, which is displaceable in the transverse direction of the web of material (6) and is, for example, ultrasonically excited, and in that a pressure roller (2) for the entrainment of the tangentially free portion of the web of material (6) is adapted to be controllable at a location on the winding drum (1) with as small a spacing as possible from the cutting location (10).

6. Apparatus according to claim 5, characterised in that a vacuum arrangement (9) is incorporated in the cutting bar (7) for the securement of the web of material (6).

7. Apparatus according to claim 5, characterised in that the cutting bar (7) is secured to the conveying device (4).

8. Apparatus according to claim 5, characterised in that the cutter (12) of the cutting system (11) forms, with the horizontal, an angle which lies between 5° and 30°.

## Revendications

1. Procédé de coupe à la longueur d'une nappe continue (6) de matière de construction de bandages, destinée à des corsets de bandages pneumatiques de véhicules, par sectionnement transversal ou coupe en largeur au moyen d'un système de coupe, par exemple attaqué par ultra-sons la nappe continue (6) de matière étant amenée par un dispositif d'amenée (4) tangentiellement sur un tambour d'enroulement (1) et enroulée jusqu'à ce qu'à peu près une longueur correspondant à la circonférence soit atteinte et ensuite le tambour d'enroulement (1) est mis à l'arrêt,
caractérisé
en ce que la nappe continue (6) de matière est fixée dans la région d'un sommier de coupe (7) se trouvant immédiatement devant le dispositif d'amenée (4), en particulier par dépression, en ce qu'ensuite un rouleau de serrage (2) qui est en appui sous une pression définie contre la nappe continue (6) de matière lors de l'enroulement de cette dernière ou un rouleau séparé est rapproché du sommier de coupe (7) de manière qu'il déplace la nappe continue de matière (6) tangentiellement libre vers la circonférence du tambour d'enroulement, de sorte que la bande continue de matière (6) est mise sous tension et est fixée en un lieu aussi proche que possible du lieu de fixation produite par dépression et en ce que la bande continue de matière (6) qui est à cet état est sectionnée par une lame de coupe (12).

2. Procédé selon la revendication 1, caractérisé en ce que la vitesse adoptée du dispositif d'amenée (4) est d'environ 2% inférieure à la vitesse du tambour d'enroulement (1), de manière que la bande continue de matière (6) soit tenue sous précontrainte.

3. Procédé selon la revendication 1, caractérisé en ce qu'après le sectionnement de la nappe continue de matière (6), le tambour d'enroulement (1) est remis en marche, de sorte que le rouleau de serrage (2) roule sur l'extrémité restante de la nappe continue de matière (6).

4. Procédé selon la revendication 1, caractérisé en ce que la rotation du tambour d'enroulement (1) a lieu sur au moins 330° alors que le début de la nappe continue de matière (6) est à la première étape.

5. Dispositif pour la mise en oeuvre du procédé selon la revendication 1, comprenant un tambour d'enroulement (1), un dispositif d'amenée (4) à l'aide duquel la nappe continue de matière (6) peut être amenée tangentiellement sur le tambour d'enroulement (1), un sommier de coupe (7) qui se trouve entre le tambour d'enroulement (1) et le dispositif d'amenée (4), caractérisé en ce qu'un système de coupe (11) déplaçable en direction transversale de la nappe continue de matière (6). par exemple attaqué par ultra-sons, est présent et en ce qu'un rouleau de serrage (2) destiné à entraîner la partie tangentiellement libre de la bande continue de matière (6) est réalisé de manière à être commandé en un lieu situé sur le tambour de commande (1) de manière à être placé à une distance aussi faible que possible du lieu de coupe (10).

6. Dispositif selon la revendication 5, caractérisé en ce qu'un dispositif (9) d'exercice d'une dépression est intégré dans le sommier de coupe (7) pour la fixation de la nappe continue de matière (6).

7. Dispositif selon la revendication 5, caractérisé en ce que le sommier de coupe (7) est fixé au dispositif d'amenée (4).

8. Dispositif selon la revendication 5, caractérisé en ce que la lame (12) du dispositif de coupe (11) inscrit avec l'horizontale un angle compris entre 5 et 30°.
